# EUROPÄISCHE PATENTANMELDUNG

(11) **EP 0 534 098 A1**
(43) Veröffentlichungstag der Anmeldung: **31.03.1993**
(21) Anmeldenummer: 92113296.5
(22) Anmeldetag: 05.08.1992
(51) Int. Cl.: F16N 7/30, B62J 31/00

(54) **Kettenschmierung für ein Fahrzeug**

(30) Priorität: 24.09.1991 CH 2835/91
(71) Anmelder: Fischer, Peter, CH-6234 Triengen (CH)
(72) Erfinder: Fischer, Peter, CH-6234 Triengen (CH)
(74) Vertreter: Kemény, Andreas (CH)

(57) **Zusammenfassung**

Es ist ein am Fahrzeug (1) an geeigneter Stelle angebrachter Vorratsbehälter (8) für Schmiermittel vorhanden, der vorzugsweise eine Spraydose ist. Im Falle einer Spraydose wird deren Behälterventil (80) dauernd offen gehalten. Der Vorratsbehälter (8) ist durch eine Schmiermittelverbindung (9) mit dem von ihm distanzierten Abgabeventil (12) verbunden. Das Abgabeventil (12) ist vorzugsweise der Abgabeöffnung (13) benachbart angeordnet und kann durch ein Betätigungsorgan (3) über eine Wirkverbindung (4, 5) vorzugsweise elektrisch geöffnet werden. So kann dosiert unter Druck stehendes Schmiermittel praktisch jederzeit auf die Kette gebracht werden. Als Betätigungsmittel (3) kann in einer Verwendung der Lichthupe-Schalter des Motorrads (1) verwenden werden.

## Beschreibung

Die vorliegende Erfindung betrifft eine Kettenschmierung für ein Fahrzeug, insbesondere für ein Zweiradfahrzeug` beispielsweise ein Motorrad.

Die Kette sowie die zugehörigen Kettenräder eines Motorrads unterliegen einer starken Beanspruchung, die ein regelmässiges Schmieren erforderlich macht. Weil das eine unangenehme, oft von einer Person nicht alleine durchführbare und schmutzigmachende Arbeit bedingt, wird das Schmieren oft vernachlässigt. Das kann zu einem raschen Verschleiss der Kette und der Kettenräder führen.

Der Erfindung liegt die Aufgabe zugrunde, das Schmieren der Kette so zu erleichtern, dass es ohne nennenswerten Aufwand an Arbeit und Zeit von einer Person vorgenommen werden kann.

Zur Lösung dieser Aufgabe wird die im Anspruch 1 definierte Kettenschmierung vorgeschlagen.

Die erfindungsgemässe Kettenschmierung ermöglicht es, das Schmiermittel aus dem Vorratsbehälter über eine Schmiermittelleitung zum distanzierten Abgabeventil und von dort durch die Abgabeöffnung dosiert auf die Kette zu bringen, während beispielsweise das damit versehene Motorrad fährt. Dazu genügt die Auslösung des Schmiervorgangs Betätigungsmittel.

Schon eine kurze Betätigung kann für eine Schmierung der ganzen Kette genügen.

Weil man praktisch jederzeit wieder schmieren kann, beispielsweise alle 100 km, ist jeweilen nur eine kleine Schmiermittelmenge nötig (man muss ja keinen Vorrat auf der Kette anzulegen versuchen).

Man vermeidet so die Abgabe überschüssigen Schmiermittels an die Umgebung.

Man kann den Vorratsbehälter auswechselbar ausbilden, so dass man selbst beim Ersetzen des Schmiermittels sich nicht beschnmutzen muss.

Man kann den Vorratsbehälter in einer Halterung unterbringen, die sein Auswechseln besonders erleichtern kann.

Man kann den Vorratsbehälter als Druckbehälter, z.B. als Spraydose ausführen, natürlich mit umweltverträglichem Treibmittel, wie Druckluft. Dann braucht man keine andere Druckquelle oder Pumpe.

Der Vorratsbehälter, der als Druckbehälter ausgebildet ist, wird vorzugsweise mit einem Behälterventil ausgerüstet sein, wobei es sich um das Spraydosenventil handeln kann. Dieses Behälterventil ist nicht das besagte Abgabeventil, weshalb es dauernd offen gehalten werden kann und soll. Dazu kann man, beispielsweise in der Halterung Offenhaltemittel vorsehen.

Das Abgabeventil soll vorzugsweise sehr nahe bei der (gegebenenfalls mehrfachen) Abgabeöffnung angeordnet sein, so dass ein Nachtropfen von Schmiermittel weitestgehend vermeidbar ist. Ein Verblocken wird besonders bevorzugt. Es besteht dabei auch der Vorteil gemeinsamer Montage, beispielsweise an der Schwinge eines Motorrads.

Das Abgabeventil kann vorzugsweise elektrisch betätigbar ausgebildet und mit dem als elektrisches Schaltorgan ausgebildeten Betätigungsorgan durch eine aus elektrischen Leiter gebildete Wirkverbindung verbunden sein. Man braucht dann in der Praxis nur noch eine Leitung (der zweite Leiter ist bekanntlich die Masse), beispielsweise vom Lenker zur Schwinge zu verlegen. Im Falle eines Motorrades kann man als Betätigungsorgan den Lichthupe-Schalter benützen, so dass nicht einmal ein gesonderter Schalter montiert werden muss.

Also kann man auf einfache Weise und ohne grossen Montageaufwand die erfindungsgemässe Kettenschmierung an einem Fahrzeug ab Werk oder später anbringen.

Die Erfindung wird nachstehend anhand der rein schematischen Zeichnung beispielsweise näher beschrieben.
Es zeigen:
- Fig. 1: eine Seitenansicht eines mit der Kettenschmierung ausgerüsteten Motorrads,
und
- Fig. 2: eine mit Unterbrechungen aneinandergereihte Folge der Teile der Kettenschmierung, welche gegenüber Fig. 1 vergrössert dargestellt ist, ohne dass die einzelnen Teile dabei gleiche Vergrösserungsfaktoren aufweisen.

In der Zeichnung bedeuten:
- 1: Motorrad.
- 2: Lenker von 1.
- 3: Betätigungsorgan (hier ein Lichthupe-Schalter) an 2.
- 4: Elektrische Leitung von 3 zu 12.
- 5: Rahmen von 1, als zweite elektrische Leitung.
- 6: Batterie.
- 7: Halterung von 8 an 5.
- 70: Offenhaltung von 80.
- 8: Vorratsbehälter, hier Spraydose, auswechselbar in 7.
- 80: Behälterventil von 8.
- 9: Schmiermittelverbindung von 8 bzw. 80 zu 12.
- 10: Schwinge von 1.
- 11: Kette von 1.
- 12: Abgabeventil an 10, nahe 11.
- 120: Schmiermittelverbindung von 12 und 13 (damit verblockt).
- 13: Abgabeöffnung (doppelläufig) mit 12 verblockt.

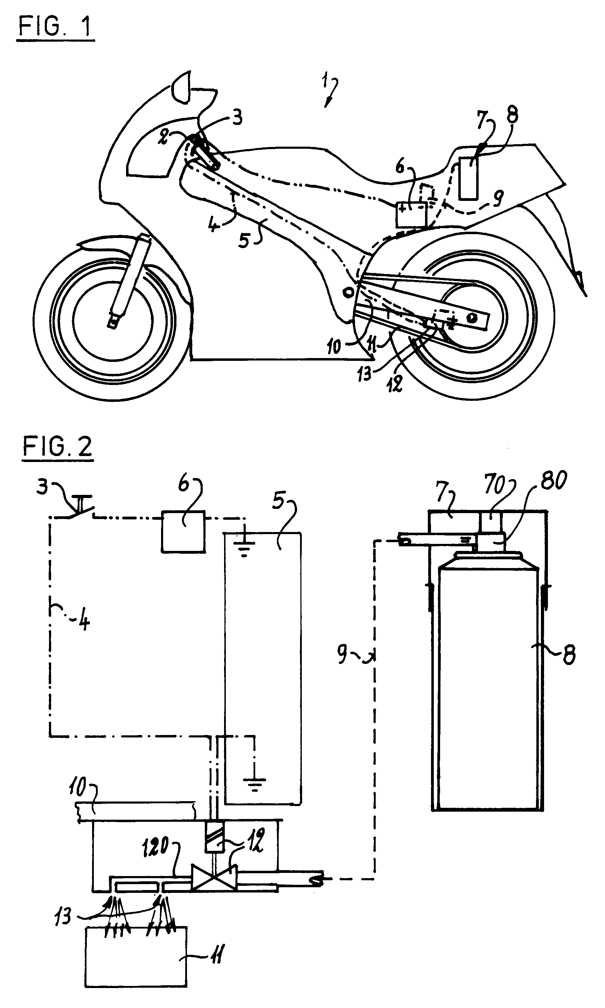

Die deutlicher in Fig. 2 ersichtlichen Teile der Kettenschmierung sind gemäss Fig. 1 wie folgt angeordnet:

Am Rahmen 5 des Motorrads 1 ist unter dem (nicht numerierten) Sattel die Halterung 7 für den Vorratsbehälter 8 (Spraydose) angebracht. Eine Offenhaltung 70 hält das Behälterventil 80 dauernd offen, wenn der Vorratsbehälter in der Halterung 7 eingesetzt ist.

Dann ist die Schmiermittelverbindung 9 vom dauernd offenen Behälterventil 80 bis zum Abgabeventil 12 mit dem unter Druck stehenden Vorratsbehälters 8 verbunden, so dass der Druck am Abgabeventil 12 liegt.

Das Abgabeventil 12 ist über die Schmiermittelverbindung 120 mit der Abgabeöffnung 13 in einem Block verbunden, so dass nach einer Oeffnung und Schliessung des Abgabeventils 12 praktisch kein Schmiermittel nachtropfen kann.

Der Block aus Abgabeventil 12 und Abgabeöffnung 13 ist an der Schwinge 10 des Motorrads 1 unmittelbar über der Kette 11 angeordnet, so dass auch dadurch einer Verschwendung von Schmiermittel vorgebeugt wird.

Das Abgabeventil ist elektrisch betätigbar, wozu es über die Leitung 4 und den Rahmen 5 über das Betätigungsorgan 3 (hier der Lichthupe-Schalter) von der Batterie 6 mit Strom versorgt werden kann.

Man kann also mit einfachsten Mitteln eine einfach bedienbare und wartungsarme Kettenschmierung realisieren, die sich bald durch die Einsparung von Verschleiss und jedenfalls durch Vermeiden vorzeitiger Kettenwartung rechtfertigt.

## Patentansprüche

1. Kettenschmierung für ein Fahrzeug, dadurch gekennzeichnet, dass ein Vorratsbehälter (8) für Schmiermittel, ein vom Vorratsbehälter (8) distanziertes Abgabeventil (12) zur Dosierung der abzugebenden Menge des Schmiermittels, ein Betätigungsorgan (3) zur Betätigung des Abgabeventils (12) und eine Abgabeöffnung (13) zur Abgabe des vom Abgabeventil (12) freigegebenen Schmiermittels vorgesehen sind, wobei zwischen dem Vorratsbehälter (8) und dem Abgabeventil (12) einerseits und zwischen dem Abgabeventil (12) und der Abgabeöffnung (13) andererseits je eine schmiermittelleitende Schmiermittelverbindung (9; 120) vorgesehen ist, und wobei zwischen dem Betätigungsorgan (3) und dem Abgabeventil (12) eine Wirkverbindung (4, 5) besteht, dergestalt, dass im Betrieb das unter Druck stehende Schmiermittel vom Vorratsbehälter (8) durch das mittels des Betätigungsorgans (3) zeitweilig geöffnete Abgabeventil (12) zur Abgabeöffnung (13) und durch die Abgabeöffnung (13) auf die Kette (11) gelangt.

2. Kettenschmierung nach Anspruch 1,
dadurch gekennzeichnet, dass der Vorratsbehälter (8) auswechselbar ist.

3. Kettenschmierung nach Anspruch 1 oder 2,
dadurch gekennzeichnet, eine Halterung (7) für den Vorratsbehälter (8) vorgesehen ist.

4. Kettenschmierung nach einem der Ansprüche 1 bis 3,
dadurch gekennzeichnet, dass der Vorratsbehälter (8) als Druckbehälter, vorzugsweise als Spraydose ausgeführt ist.

5. Kettenschmierung nach einem der Ansprüche 1 bis 4,
dadurch gekennzeichnet, dass am Vorratsbehälter (8) ein durch Offenhaltemittel (70) dauernd offenhaltbares Behälterventil (80) vorgesehen ist.

6. Kettenschmierung nach einem der Ansprüche 1 bis 5,
dadurch gekennzeichnet, dass die Abgabeöffnung (13) dem Abgabeventil (12) benachbart angeordnet und vorzugsweise damit verblockt ist.

7. Kettenschmierung nach einem der Ansprüche 1 bis 6,
dadurch gekennzeichnet, dass das Abgabeventil (12) elektrisch betätigbar ausgebildet und mit dem als elektrisches Schaltorgan ausgebildeten Betätigungsorgan (3) durch eine als elektrische Leiter ausgebildete Wirkverbindung (4, 5) verbunden ist.

8. Verwendung einer Kettenschmierung nach einem der Ansprüche 1 bis 7 an einem Motorrad (1), wobei der Lichthupe-Schalter gleichzeitig als Betätigungsorgan (3) des Abgabeventils (12) dient.
